# EUROPÄISCHE PATENTANMELDUNG

(11) **EP 0 633 366 A1**
(43) Veröffentlichungstag der Anmeldung: **11.01.1995**
(21) Anmeldenummer: 94110172.7
(22) Anmeldetag: 30.06.1994
(51) Int. Cl.: E04F 15/024, H02G 3/18, F24F 7/10, E04B 5/48

(54) **Fussbodenplatte, insbesondere für Hohl- oder Doppelböden**

(30) Priorität: 06.07.1993 DE 4322426
(71) Anmelder: Goldbach GmbH Holz-, Kunststoff-und Metallverarbeitung, D-63773 Goldbach (DE)
(72) Erfinder: Markert, Klaus, D-63762 Grossostheim, (DE)
(74) Vertreter: Zapfe, Hans, Dipl.-Ing.

(57) **Zusammenfassung**

Innerhalb des umlaufenden Randes (3) einer Fußbodenplatte (1) mit einer Plattenoberfläche (2) ist mindestens eine vorgefertigte Ausnehmung (4, 5) angeordnet, die Stützflächen (4a, 4b) für Einsatzplatten (6, 7, 8) und die Einsatzplatten selbst aufweist. Dabei entspricht der senkrechte Abstand (S) der Stützflächen (4a, 4b) von der Plattenoberfläche (2) im wesentlichen der Dicke (D) der Einsatzplatten (6, 7, 8). Um eine universelle Einsatzmöglichkeit bei kleinstmöglichen Öffnungsquerschnitten zu schaffen, besitzt die mindestens eine Ausnehmung (4, 5) einen rechteckigen Umriß und weist auf gegenüberliegenden Seiten ihres Umfangs die paarweise parallel zueinander verlaufenden Stützflächen (4a, 4b) auf. Ferner sind in die mindestens eine Ausnehmung (4, 5) in Längsrichtung der Ausnehmung mindestens je zwei vorgefertigte Einsatzplatten (6, 7, 8) mit rechteckigem Umriß nebeneinander einsetzbar, die wahlweise mit Durchbrüchen (6a, 8b) versehen oder zumindest im wesentlichen geschlossen ausgebildet sind.

## Beschreibung

Die Erfindung betrifft eine Fußbodenplatte mit einer Plattenoberfläche und einem umlaufenden Rand, insbesondere für Hohl- oder Doppelböden, bei der innerhalb des Randes mindestens eine vorgefertigte Ausnehmung angeordnet ist, die Stützflächen für Einsatzplatten und die Einsatzplatten selbst aufweist, wobei der senkrechte Abstand der Stützflächen von der Plattenoberfläche im wesentlichen der Dicke der Einsatzplatten entspricht.

Derartige Fußbodenplatten werden üblicherweise mit ihren Ecken auf Stützen verlegt, um zwischen einem Unterboden und den Platten einen Hohlraum zu schaffen, in dem Kabel und Leitungen aller Art für Datenverarbeitungsgeräte und Rechenzentren verlegt werden können und der auch zur Zufuhr von Kühlluft zu den Datenverarbeitungsgeräten und von aufbereiteter Luft zur Raumklimatisierung dienen kann. Manchmal haben derartige Rechenzentren nur Stellflächen zwischen 50 und 200 Quadratmeter, die vollständig ausgenutzt werden müssen.

Durch die US-A-2 867 301 ist es bekannt, Platten dieser Art nachträglich, d.h. auf der Baustelle, mit Bohrungen oder Ausschnitten zu versehen, die als Durchgänge für Kabel Leitungen und Luft dienen. Dabei sind die kleinen Borungen dem Leitungsdurchmesser eines einzelnen Kabels angepaßt, mittelgroße Öffnungen für die Durchführung mehrere Leitungen bleiben offen, und nur die großen Luftzuführungsöffnungen, die sich auch über die Ränder zwischen zwei dadurch geschwächten Platten erstrecken können, sind durch aufgelegte und nicht durch eingelassene Gitter abgedeckt. Die Herstellung von stufenförmig abgesetzten Stützflächen zur versenkten Unterbringung von Verschlußplatten ist bekanntlich von Hand auf einer Baustelle nicht ohne weiteres möglich. Damit entstehen aber auch hier wiederum Stolperstellen.

Die vorstehend beschriebene Maßnahme ist aufwendig und erschwert und verteuert den Aufbau der Böden, und die Ausschnitte können auch nicht immer paßgenau hergestellt werden, so daß durch zu größe Öffnungen ein unschönes Aussehen entsteht. Die sorgfältigste Planung aber wird hinfällig, wenn derartige Räume nachträglich umgerüstet werden müssen, wobei die Leitungsverlegung und die Installation geändert und/oder erweitert werden müssen. Diese Notwendigkeit besteht heute sehr oft aufgrund von Änderungen der Personal- und Organsisationsstruktur des Unternehmens. Oft müssen daher die alten Platten verworfen werden, weil eine Änderung der Ausschnitte nicht mehr möglich ist. Außerdem kann die Kühlluft nicht immer genau den Maschinen zugeführt werden und zirkuliert infolgedessen unkontrolliert im Raum.

Durch die US-A-3 924 370 ist es bekannt, in Fußbodenplatten unter elektronischen Geräten in Rechteckform angeordnete Reihen von Ventilationsöffnungen anzubringen. Es ist aber nicht angegeben, daß Teile einzelner Platten herausnehmbar sein sollen.

Durch die DE 33 30 739 C1 ist es bekannt, in flanschförmig überstehenden Rändern von Fußbodenplatten Ausschnitte für einen Luftdurchtritt vorzusehen. Die zwischen benachbarten Platten gebildeten Schlitze sind jedoch nach oben hin offen und nicht durch eingelegten Platten verschlossen. Die Schlitze können alternativ auch durch Distanzleisten erzeugt werden, die - mit Abständen - auf gegenüberliegende, nicht unterbrochene flanschförmige Ränder aufgesteckt und mit diesen verklebt sind. Durch den Überstand der Distanzleisten nach oben werden auch in diesem Falle Stolperstellen gebildet.

Durch die DE-A-29 00 759 ist schließlich eine Fußbodenplatte der eingangs angegebenen Gattung bekannt, die vier kreisrunde Durchbrüche mit einem Durchmesser von etwa 200 mm aufweist. Laut Angabe können in diesen Durchbrüchen Steckdosen, Anschlüsse für Geräte und Düsenöffnungen untergebracht werden, und sie werden bei Nichtgebrauch abgedeckt. Teil abdeckungen, beispielsweise durch sektorförmige Platten, sind jedoch nicht möglich, weil in der Mitte eine Unterstützung fehlt. Beim Abdecken mit einer Halbkreisscheibe und bei einer Durchführung von Leitungen durch den offenen Halbkreisquerschnitt aber bliebe eine große Öffnung bestehen, die eine typische Stolperstelle bildet.

Der Erfindung liegt daher die Aufgabe zugrunde, eine Fußbodenplatte der eingangs beschriebenen Art anzugeben, die universell verwendbar ist und nachträglich leicht, auch durch den Anwender, umgerüstet werden kann, wobei um die Leitungen herum kleinstmögliche offene Querschnitte gebildet werden.

Die Lösung der gestellten Aufgabe erfolgt erfindungsgemäß dadurch, daß die mindestens eine Ausnehmung einen rechteckigen Umriß besitzt und auf gegenüberliegenden Seiten ihres Umfangs die paarweise parallel zueinander verlaufenden Stützflächen aufweist, und daß in die mindestens eine Ausnehmung in Längsrichtung der Ausnehmung mindestens je zwei vorgefertigte Einsatzplatten mit rechteckigem Umriß nebeneinander einsetzbar sind, die wahlweise mit Durchbrüchen versehen oder zumindest im wesentlichen geschlossen ausgebildet sind.

Jede der Platten bildet dabei zusammen mit den Einsatzplatten ein Baukastensystem, so daß eine maßgeschneiderte Erstausrüsteung ebenso möglich ist wie eine nachträgliche Umrüstung vor Ort. Säge-, Bohr- und Trennarbeiten sind dabei nicht mehr erforderlich. Die Öffnungen können genau den Leitungsquerschnitten bzw. den Summenquerschnitten ganzer Kabelstränge angepaßt werden, so daß ein unschönes Aussehen ebenso vermieden wird wie Stolperstellen. Kühlluft kann gezielt den Maschinen zugeführt werden, so daß eine effektivere und ökonomischere Kühlung möglich ist. Aufbereitete Luft ist bekanntlich teuer. Insbesondere aber ist auch eine nachträgliche Änderung der Klimaführung in dem betreffenden Raum lediglich durch Umsetzen durchbrochener Einsatzplatten möglich, wenn die Wärmebelastung und/oder die Geräteaufstellung dies erfordern.

Auch entfällt mindestens teilweise ein Entsorgen ansonsten nicht mehr brauchbarer Platten nach dem Stande der Technik auf Deponien, so daß zusätzlich die Umwelt geschont wird.

Mindestens zwei, vorzugsweise vier, Einsatzplatten mit und ohne Durchbrüche können hierbei nach freier Wahl nebeneinander liegen und bei Änderungen ausgetauscht und umgelegt werden. Es ist auch möglich, eine der Einsatzplatten ganz wegzulassen, wenn bespielsweise ein besonders starker Kabelstrang durch die Ausnehmung hindurchzuführen ist.

Es ist schließlich wiederum von Vorteil, wenn mindestens eine der Einsatzplatten bei im übrigen rechteckigem Umriß im Bereich mindestens einer ihren Außenkanten eine Ausnehmung aufweist. Dadurch ist es möglich, zwei der Einsatzplatten mit je einer Ausnehmung "auf Umschlag" in der Weise nebeneinander zu legen, daß sich zwei Ausnehmungen zu einer gemeinsamen Öffnung ergänzen.

Die Universalität wird weiter gesteigert, wenn in jeder Fußbodenplatte zwei rechteckige Ausnehmungen angeordnet sind, deren längste Mittenachsen (A1-A1; A2-A2) parallel zueinander und zu zwei gegenüberliegenden Randkanten der Fußbodenplatte verlaufen.

Die Einsatzplatten können dabei aus aus Metall mit einem korrosions- und verschleißfesten Überzug aus einem Kunststoff oder vollständig aus einem hochfesten Kunststoff bestehen.

Bei besonders hohen Belastungen ist es weiterhin von Vorteil, wenn die Fußbodenplatten in ihrem Randbereich mit einem umlaufenden Verstärkungsrahmen unterlegt sind, insbesondere dann, wenn weiterhin der Verstärkungsrahmen aus einem nach unten offenen Kastenprofil mit C-Querschnitt besteht.

Ein Ausführungsbeispiel des Erfindungsgegenstandes und seine Variationsmöglichkeiten werden nachfolgend anhand der Figuren 1 bis 5 näher erläutert.

Es zeigen:
- Figur 1: eine Draufsicht auf eine Fußbodenplatte mit zwei Ausnehmungen, von denen die eine (obere) noch offen ist, während die andere (untere) mit vier Einsatzplatten bestückt ist,
- Figur 2: einen Querschnitt durch die Platte nach Figur 1 entlang der Linie A1-A1 in Figur 1,
- Figur 3: eine Draufsicht auf eine Einsatzplatte mit im Rastermaß angeordneten Durchbrüchen,
- Figur 4: eine Draufsicht auf eine geschlossene Einsatzplatte, und
- Figur 5: eine Draufsicht auf eine Einsatzplatte mit einer seitlichen Ausnehmung.

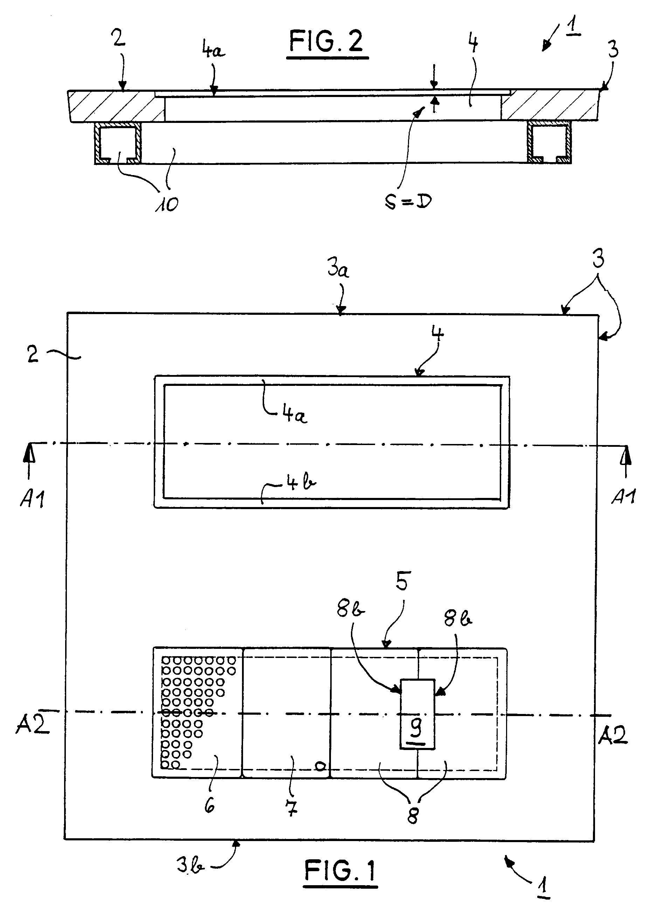

Die Figuren 1 und 2 zeigen eine Fußbodenplatte 1 mit einer ebenen Plattenoberfläche 2 und einem umlaufenden quadratischen Rand 3 mit einer Kantenlänge von 600 mm. Die Plattenstruktur und ein üblicherweise vorhandener Belag sind der Einfachheit halber nicht dargestellt.

Innerhalb des Randes 3 sind zwei rechteckige Ausnehmungen 4 und 5 mit den Maßen 400 mm x 150 mm angeordnet, deren längste Mittenachsen A1-A1 bzw. A2-A2 parallel zueinander und zu zwei gegenüberliegenden Randkanten 3a und 3b der Fußbodenplatte 1 verlaufen. Die Ausnehmungen sind von der Plattenoberseite zur Plattenunterseite durchgehend, so daß die Fußbodenplatte 1 gewissermaßen als Doppelrahmen für die Einsatzplatten ausgebildet ist.

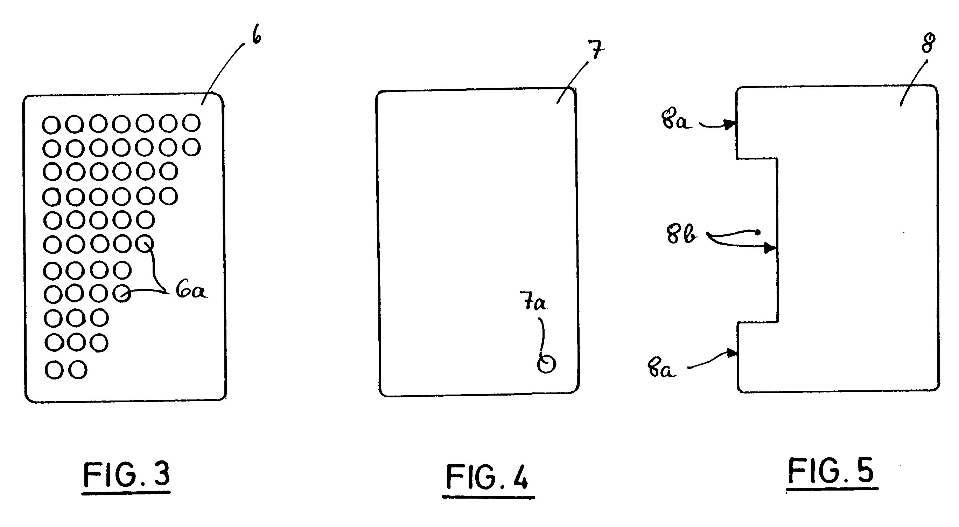

Die in der Zeichnung obere Ausnehmung 4 ist unbestückt; in die untere Ausnehmung 5 sind vier Einsatzplatten 6, 7 und 8 wie folgt eingesetzt: Die Einsatzplatte 6 (Figur 3) ist mit Durchbrüchen 6a versehen. Die Einsatzplatte 7 (Figur 4) ist mit Ausnahme einer Eingriffsöffnung 7a für ein Werkzeug zum Anheben geschlossen ausgebildet, und die Einsatzplatten 8 (Figur 5) weisen bei im übrigen rechteckigem Umriß im Bereich ihrer einen längsten Außenkante 8a je eine Ausnehmung 8b auf, die zur Durchführung von Kabeln oder Kabelsträngen verwendet werden kann. Zwei gleiche Einsatzplatten 8 sind "auf Umschlag" so nebeneinander gelegt, daß sich die beiden Ausnehmungen 8b zu einer gemeinsamen Öffnung 9 ergänzen.

Es versteht sich, daß die Bestückung auch geändert werden kann: So ist es möglich, für jede der Ausnehmungen 4 und 5 nur jeweils vier einheitliche Einsatzplatten wahlweise nach Figur 3 oder 4 oder 5 zu verwenden. Allerdings ist auch jede Kombination möglich, da sämtliche Einsatzplatten identische Außenabmessungen und Dicken aufweisen.

Die Ausnehmungen 4 und 5 weisen auf den gegenüberliegenden Langseiten ihres Umfangs Stützflächen 4a und 4b für die Einsatzplatten 6, 7 und 8 auf, und der senkrechte Abstand (S) der Stützflächen 4a und 4 b von der Plattenoberfläche 2 entspricht der Dicke (D) der Einsatzplatten 6, 7 und 8. Die Einsatzplatten bestehen vorzugsweise aus Metall mit einem korrosions- und verschleißfesten Überzug aus einem Kunststoff, können aber auch aus Gewichtsgründen aus einem hochfesten Kunststoff bestehen.

Zur Erhöhung der Festigkeit bei besonders hohen Belastungen ist die Fußbodenplatte 1 in ihrem Randbereich mit einem umlaufenden, d.h. quadratischen, Verstärkungsrahmen 10 unterlegt, der gemäß Figur 2 aus einem nach unten offenen Kastenprofil mit C-Querschnitt besteht.

## Patentansprüche

1. Fußbodenplatte (1) mit einer Plattenoberfläche (2) und einem umlaufenden Rand (3), insbesondere für Hohl- oder Doppelböden, bei der innerhalb des Randes (3) mindestens eine vorgefertigte Ausnehmung (4, 5) angeordnet ist, die Stützflächen (4a, 4b) für Einsatzplatten (6, 7, 8) und die Einsatzplatten selbst aufweist, wobei der senkrechte Abstand (S) der Stützflächen (4a, 4b) von der Plattenoberfläche (2) im wesentlichen der Dicke (D) der Einsatzplatten (6, 7, 8) entspricht, dadurch gekennzeichnet, daß die mindestens eine Ausnehmung (4, 5) einen rechteckigen Umriß besitzt und auf gegenüberliegenden Seiten ihres Umfangs die paarweise parallel zueinander verlaufenden Stützflächen (4a, 4b) aufweist, und daß in die mindestens eine Ausnehmung (4, 5) in Längsrichtung der Ausnehmung mindestens je zwei vorgefertigte Einsatzplatten (6, 7, 8) mit rechteckigem Umriß nebeneinander einsetzbar sind, die wahlweise mit Durchbrüchen (6a, 8b) versehen oder zumindest im wesentlichen geschlossen ausgebildet sind.

2. Fußbodenplatte nach Anspruch 1, dadurch gekennzeichnet, daß in die Ausnehmung (4, 5) Einsatzplatten (6, 7, 8) mit und ohne Durchbrüche (6a, 8b) eingelegt sind.

3. Fußbodenplatte nach Anspruch 1, dadurch gekennzeichnet, daß die Durchbrüche (6a) in den Einsatzplatten (6) in einem Rastermaß angeordnet sind.

4. Fußbodenplatte nach Anspruch 1, dadurch gekennzeichnet, daß mindestens eine der Einsatzplatten (8) bei im übrigen rechteckigem Umriß im Bereich mindestens einer ihrer Außenkanten (8a) eine Ausnehmung (8b) aufweist.

5. Fußbodenplatte nach Anspruch 4, dadurch gekennzeichnet, daß zwei der Einsatzplatten (8) mit Ausnehmungen (8b) in der Weise nebeneinander gelegt sich, daß sich zwei Ausnehmungen (8b) zu einer gemeinsamen Öffnung (9) ergänzen.

6. Fußbodenplatte nach Anspruch 1, dadurch gekennzeichnet, daß in jeder Fußbodenplatte (1) zwei rechteckige Ausnehmungen (4, 5) angeordnet sind, deren längste Mittenachsen (A1-A1; A2-A2) parallel zueinander und zu zwei gegenüberliegenden Randkanten (3a, 3b) der Fußbodenplatte (1) verlaufen.

7. Fußbdenplatte nach Anspruch 1, dadurch gekennzeichnet, daß die Fußbodenplatte (1) aus einem tragenden Teil und einer begehbaren Auflage besteht, deren Oberseite mit den Oberseite mit den Oberseiten der Einsatzplatte fluchten.

8. Fußbodenplatte nach Anspruch 1, dadurch gekennzeichnet, daß die Einsatzplatten (6, 7, 8) aus Metall mit einem korrosions- und verschleißfesten Überzug aus einem Kunststoff bestehen.

9. Fußbodenplatte nach Anspruch 1, dadurch gekennzeichnet, daß sie in ihrem Randbereich mit einem umlaufenden Verstärkungsrahmen (10) unterlegt ist.

10. Fußbodenplatte nach Anspruch 9, dadurch gekennzeichnet, daß der Verstärkungsrahmen (10) aus einem nach unten offenen Kastenprofil mit C-Querschnitt besteht.
